# EUROPÄISCHE PATENTSCHRIFT

(11) **EP 3 307 511 B1**
(45) Veröffentlichungstag und Bekanntmachung des Hinweises auf die Patenterteilung: **17.03.2021**
(21) Anmeldenummer: 16733890.4
(22) Anmeldetag: 10.06.2016
(51) Int. Cl.: B29C 45/16, B29C 45/14, B29D 35/00, B29D 35/14, B29D 35/06, B29D 35/08

(54) **VERFAHREN ZUR HERSTELLUNG MEHRSCHICHTIGER ARTIKEL IM SPRITZVERFAHREN**
METHOD FOR PRODUCING MULTI-LAYERED ARTICLES IN AN INJECTION-MOULDING PROCESS
PROCÉDÉ DE FABRICATION D'ARTICLES MULTICOUCHES PAR MOULAGE PAR INJECTION

(30) Priorität: 10.06.2015 DE 102015109185; 29.09.2015 DE 102015116448
(43) Veröffentlichungstag der Anmeldung: 18.04.2018
(73) Patentinhaber: "Klöckner Desma Schuhmaschinen GmbH", 28832 Achim (DE)
(72) Erfinder: STRAUSS, Adrian, 27374 Visselhövede (DE); PFEIFFER, Joachim, 27299 Langwedel (DE)
(74) Vertreter: Schneiders & Behrendt Bochum
(86) Internationale Anmeldenummer: PCT/EP2016/063259
(87) Internationale Veröffentlichungsnummer: WO 2016/198574

(56) Entgegenhaltungen:
- EP-A1- 1 629 956
- EP-A1- 2 803 463
- EP-A2- 2 103 420
- DE-A1- 2 020 335
- DE-B1- 1 485 628
- DE-B1- 1 729 141
- GB-A- 1 170 744

## Beschreibung

Die Erfindung betrifft ein Verfahren zur Herstellung mehrschichtiger Artikel im Spritzverfahren, bei dem die zur Herstellung dienenden Kunststoffmaterialien in eine aus einem Rahmen, einem Bodenstempel und einem Deckelteil gebildete Formkavität über mindestens zwei Einspritzkanäle eingebracht wird.

Obwohl die herzustellenden Artikel hierauf nicht beschränkt sind, wird die Erfindung im Folgenden als Verfahren zur Herstellung von Schuhteilen, insbesondere Sohlen beschrieben.

Es sind vergleichbare Verfahren aus der EP 2 103 420 A2 sowie der EP 2 803 463 A1 bekannt, wobei in der erstgenannten Druckschrift eine Zwischensohle in eine sogenannte "cavity pocket" eingespritzt wird. Es werden Folien sowohl auf die Gummi-Laufsohle als auch auf den "upper rubber layer" am Schaft, zur PU-Zwischensohle hin zeigend, aufgebracht.

In der zweitgenannten Druckschrift ist ein Verfahren beschrieben, bei dem zunächst in einer ersten Kavität ein Rohling erzeugt wird, der dann in eine zweite Spritzgießform eingelegt wird.

Für den Hersteller von Schuhen bzw. Sohlen sind im Produktionsablauf vor allem optimierte Taktzeiten der Maschinen und Einspritzaggregate für die größt möglich zu produzierende Stückzahl ausschlaggebend. Wenn aber aufgrund von gewünschten physikalischen oder optischen Eigenschaften, wie z. B. Festigkeit oder Farbe der Sohle, mehrschichtige Sohlen produziert werden müssen, erhöht jede Schicht wegen des verwendeten Materials und den damit verbundenen chemischen Reaktionszeiten, die zwischen den einzelnen Einspritzvorgängen eingehalten werden müssen, um einen Schuh bzw. eine Sohle von guter Qualität zu erhalten, die Taktzeit um ein Vielfaches.

Der Erfindung liegt daher die Aufgabe zugrunde, ein Verfahren der eingangs beschriebenen Art zu entwickeln, das es ermöglicht, zwei Schichten eines mehrschichtigen Artikels unmittelbar nacheinander, ohne Berücksichtigung eventueller Reaktionszeiten und mit verschiedenen Eigenschaften ohne zwischenzeitliche Formöffnung einzuspritzen.

Die Erfindung löst diese Aufgabe gemäß dem Anspruch 1 derart, dass der mehrschichtige Artikel eine an einen auf einen Leisten aufgezogenen Schuhschaft angespritzte Sohle ist, wobei das Deckelteil durch einen Leisten, auf den der Schuhschaft aufgezogen ist, gebildet wird, und wobei mittels einer auf den Rahmen aufgesetzten Klemmvorrichtung eine Folie über die Formkavität gespannt wird und über den unteren Einspritzkanal eine erste Schicht unter die Folie gespritzt wird und unmittelbar danach über den zweiten Einspritzkanal eine zweite Schicht über der Folie gespritzt wird, wodurch diese Schicht mittels der Folie mit der darunter vorhandenen Schicht verbunden wird, wobei Kunststoffmaterialien verwendet werden, die sich untrennbar mit der Folie verbinden..

Auf diese Weise trennt die Folie insofern die beiden Schichten, wodurch verschiedene Reaktionszeiten der unterschiedlichen Materialien keine Rolle spielen, sie verbindet andererseits aber die beiden Schichten untrennbar miteinander.

Dabei kann vorgesehen sein, dass die erste Schicht unterhalb der Folie direkt auf eine bereits in die Kavität eingespritzte oder eingelegt, aktivierte Schicht aufgespritzt wird, was im konkreten Fall eine Laufsohle sein kann. Die darüber befindliche Schicht ist dann die Zwischensohle und die oberhalb der Folie gespritzte Schicht ist im vorliegenden Beispiel dann die Schaftsohle, durch die - wie der Name sagt- das komplette Sohlenpaket mit dem Schaft zum fertigen Schuh verbunden wird.

Dabei ist gemäß einer vorteilhaften Ausführungsform der Erfindung vorgesehen, dass zum Einspritzen der Kunststoffmaterialien sowohl in den ersten als auch in den zweiten Einspritzkanal dasselbe Einspritzaggregat verwendet werden kann. Die Einspritzkanäle sind vertikal übereinander angeordnet, und das Einspritzaggregat ist entsprechend vertikal verfahrbar.

Alternativ kann natürlich auch vorgesehen sein, dass zwei nebeneinander angeordnete Aggregate, die starr ausgerichtet sind, für die jeweiligen Schichten verantwortlich sind.

Zur Herstellung der zweiten Schicht, im vorliegenden Beispiel der Schaftsohle, ist gemäß einer weiteren vorteilhaften Ausgestaltung der Erfindung vorgesehen, dass mittels einer Fließhilfe unterhalb des Deckelteils ein Raum zum Einspritzen dieser zweiten Schicht oberhalb der Folie geschaffen wird.

Bei einer Variante ist vorgesehen, dass statt des Einlegens einer Fließhilfe auf die Folie, das Deckelteil durch einen Kurzhub in die Kavität eintaucht und dabei die Folie nach unten spannt, wonach die erste Schicht gespritzt wird und die Folie sich mit ihr verbindet und nach Anheben des Deckelteils in seine Normalstellung ein Raum zum Einspritzen der zweiten Schicht oberhalb der Folie geschaffen wird.

Im vorliegenden Beispiel wird daher der mit dem Schuhschaft bezogene Leisten durch den Kurzhub in die Kavität abgesenkt und nach dem Spannen der Folie bzw. dem Einspritzen der Zwischensohle durch Anheben des Leistens in die Ausgangsstellung Raum geschaffen wird zum Einspritzen der Schaftsohle.

Bei einer bevorzugten Ausführungsform besteht die Klemmvorrichtung aus zwei am Rahmen angeordneten Teilen, die zum Klemmen der Folie auf die Rahmenoberseite heruntergeklappt werden. Die Teile der Klemmvorrichtung sind dabei zum manuellen Schließen und Öffnen direkt mit dem Klappscharnier am jeweiligen Formseitenteil befestigt.

Alternativ kann die Klemmvorrichtung aus am Deckelteil angeordneten Elementen bestehen, die zum Klemmen der Folie zusammen mit dem Deckelteil beim Verschließen der Formkavität auf die Rahmenoberseite herabgefahren werden.

Im vorliegenden Beispiel sind die Teile der Klemmvorrichtung an einer Produktionsanlage starr neben dem Leistenhalter befestigt, so dass die, auf die Seitenformteile aufsetzenden Teile dieser Klemmvorrichtung direkt mit dem Leisten in Richtung Formkavität heruntergefahren werden können.

Die Erfindung wird im Folgenden anhand von Zeichnungen dargestellt.

Es zeigen:
- Fig. 1:: Längsschnitt einer Spritzgießform mit einer aufgesetzten Klemmvorrichtung;
- Fig. 2:: Querschnitt einer Spritzgießform mit aufgesetzter Klemmvorrichtung.

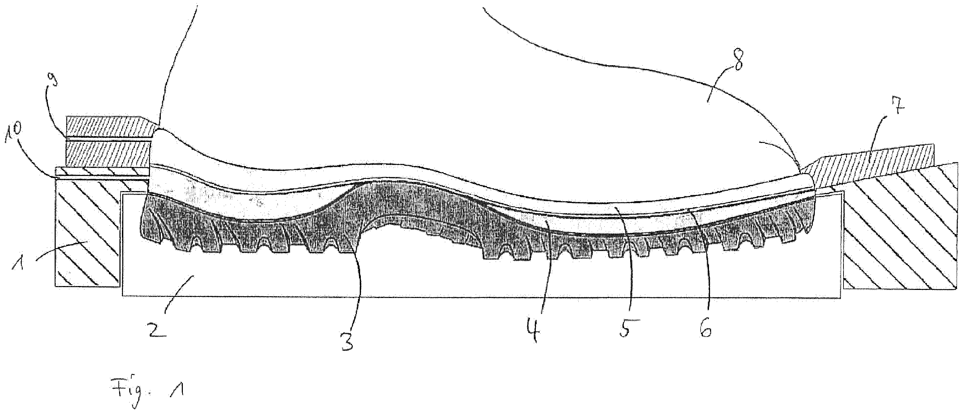

In der Figur 1 ist eine Spritzgießform dargestellt, bestehend aus einem Rahmen 1, der aus zwei Seitenformteilen besteht, die zur Bildung einer Formkavität zusammengefahren werden, sowie einem Bodenstempel 2. Im vorliegenden Beispiel ist der dreischichtige Aufbau einer Sohle für einen Schuh dargestellt, wobei die Sohle aus der zuvor bereits in die Kavität eingelegten Laufsohle 3, der Zwischensohle 4 und der Schaftsohle 5 besteht. Eine Klemmvorrichtung 7 ist auf den Rahmen 1 aufgesetzt, wodurch eine Folie 6 festgehalten wird, die oberhalb der Formkavität aufgespannt wird. Die Zwischensohle 4 wird über einen unteren Einspritzkanal 10 auf die Laufsohle 3 und unter die Folie 6 eingespritzt. Die Schaftsohle 5, die nach oben hin durch einen mit dem Schaft bezogenen Leisten 8 und nach unten durch die Folie 6 begrenzt wird, wird über den oberen Einspritzkanal 9 eingespritzt.

Der Leisten 8 bildet hierbei das Deckelteil der Vorrichtung.

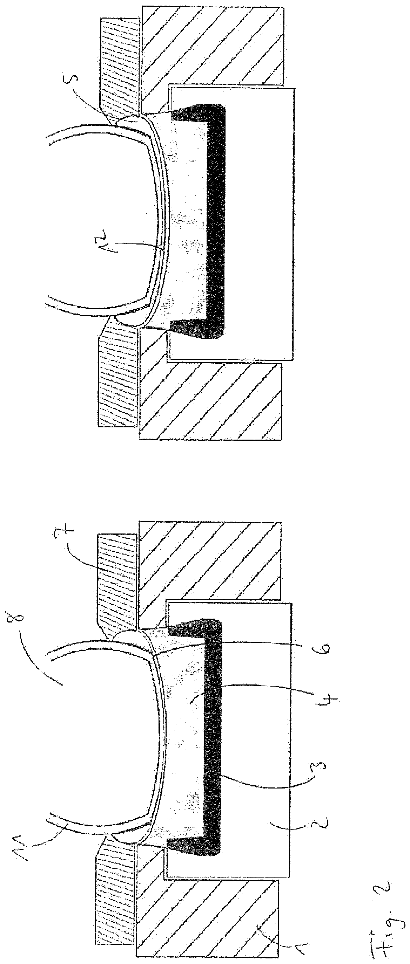

In der Figur 2 ist dargestellt, wie der Leisten 8 als Deckelteil einen Kurzhub ausführt, derart, dass er zwischen den Seitenformteilen des Rahmens 1 mit aufgesetzter Klemmvorrichtung 7 sich in der unteren Position befindet. Dabei drückt der mit dem Schaft 11 bezogene Leisten 8 die Folie 6 etwas nach unten. Beim Einspritzen der Zwischensohle 4 zwischen die Folie 6 und die Laufsohle 3 haftet die Folie 6 an dem Zwischensohlenmaterial 4, so dass nach dem Anheben des Leistens 8 um den Kurzhub in die Ausgangsstellung ein Raum 12 zwischen Schaft 11 und Folie 6 entsteht. In den enstandenen Raum 12 oberhalb der Folie 6 wird die Schaftsohle 5 eingespritzt, die die Verbindung zwischen Folie 6 und Schaft 11 herstellt.

## Patentansprüche

1. Verfahren zur Herstellung mehrschichtiger Artikel im Spritzverfahren, bei dem die zur Herstellung dienenden Kunststoffmaterialien in eine aus einem Rahmen (1), einem Bodenstempel (2) und einem Deckelteil (8) gebildete Formkavität über mindestens zwei Einspritzkanäle (9, 10) eingebracht wird, wobei der mehrschichtige Artikel eine an einen auf einen Leisten aufgezogenen Schuhschaft angespritzte Sohle ist, wobei das Deckelteil (8) durch einen Leisten, auf den der Schuhschaft (11) aufgezogen ist, gebildet wird, und wobei mittels einer auf den Rahmen (1) der Formkavität aufgesetzten Klemmvorrichtung (7) eine Folie (6) über die Formkavität gespannt wird und über den unteren Einspritzkanal (10) eine erste Schicht (4) unter die Folie (6) gespritzt wird und unmittelbar danach über den zweiten Einspritzkanal (9) eine zweite Schicht (5) über der Folie (6) gespritzt wird, wodurch diese Schicht (5) mittels der Folie (6) mit der darunter vorhandenen Schicht (4) verbunden wird, wobei Kunststoffmaterialien verwendet werden, die sich untrennbar mit der Folie verbinden.

2. Spritzgießverfahren nach Anspruch 1, **dadurch gekennzeichnet, dass** mittels einer Fließhilfe unterhalb des Deckelteils (8) und oberhalb der Folie (6) ein Raum (12) zur Herstellung der zweiten Spritzgießschicht (5) offen gehalten wird.

3. Spritzgießverfahren nach Anspruch 1, **dadurch gekennzeichnet, dass** das Deckelteil (8) vor dem Befüllen der Formkavität durch einen Kurzhub in die Formkavität eintaucht und dabei die Folie (6) nach unten spannt, wonach das Kunststoffmaterial der ersten Spritzgießschicht (4) eingespritzt wird und sich mit der Folie (6) verbindet, und dass danach oberhalb der Folie (6) durch Anheben des Deckelteils (8) in seine Normalstellung ein Raum (12) zum Einspritzen des Kunststoffmaterials für die angrenzende zweite Spritzgießschicht (5) geschaffen wird.

4. Spritzgießverfahren nach einem der Ansprüche 1-3, **dadurch gekennzeichnet, dass** die erste Spritzgießschicht (4) unterhalb der Folie (6) direkt auf eine bereits in die Formkavität eingespritzte oder eingelegte, aktivierte Spritzgießschicht (3) aufgespritzt wird.

5. Spritzgießverfahren nach einem der Ansprüche 1-4, **dadurch gekennzeichnet, dass** zum Einspritzen der Kunststoffmaterialien sowohl in den ersten (10) als auch in den zweiten Einspritzkanal (9) ein einziges höhenverstellbares Einpritzaggregat verwendet wird.

6. Spritzgießverfahren nach einem der Ansprüche 1-4, **dadurch gekennzeichnet, dass** zum Einspritzen der Kunststoffmaterialien in die Einspritzkanäle (10,9) zwei nebeneinander angeordnete, starr ausgerichtete Einspritzaggregate verwendet werden.

7. Spritzgießverfahren nach einem der Ansprüche 1-6, **dadurch gekennzeichnet, dass** die Klemmvorrichtung (7) aus zwei am Rahmen (1) angeordneten Teilen besteht, die zum Klemmen der Folie (6) auf die Rahmenoberseite heruntergeklappt werden.

8. Spritzgießverfahren nach einem der Ansprüche 1-6, **dadurch gekennzeichnet, dass** die Klemmvorrichtung (7) aus außen am Deckelteil (8) angeordneten Elementen besteht, die zum Klemmen der Folie (6) zusammen mit dem Deckelteil (8) beim Verschließen der Formkavität auf die Rahmenoberseite herabgefahren werden.

## Claims

1. Method for producing multi-layered articles in an injection-moulding process, in which the plastics materials used for the production are introduced into a mould cavity formed by a frame (1), a base die (2) and a cover part (8) through at least two injection channels (9, 10), wherein the multi-layered article is a sole that is injection-moulded onto a shoe upper mounted on a last, wherein the cover part (8) is formed by a last, on which the shoe upper (11) is mounted, and wherein, by means of a clamping device (7) mounted on the frame (1) of the mould cavity, a film (6) is stretched over the mould cavity and a first layer (4) is injected below the film (6) through the lower injection channel (10) and, immediately thereafter, a second layer (5) is injected above the film (6) through the second injection channel (9), as a result of which this layer (5) is connected to the layer (4) positioned thereunder by means of the film (6), wherein plastics materials are used which inseparably connect to the film.

2. Injection-moulding method according to claim 1, **characterised in that** a space (12) for producing the second injection-moulded layer (5) is kept open by means of a flow aid below the cover part (8) and above the film (6).

3. Injection-moulding method according to claim 1, **characterised in that**, before filling the mould cavity, the cover part (8) dips into the mould cavity by a short stroke and the film (6) is stretched downwards in the process, after which the plastics material of the first injection-moulded layer (4) is injected and connects to the film (6), and **in that**, by raising the cover part (8) into its normal position, a space (12) is subsequently produced above the film (6) in order to inject the plastics material for the adjoining second injection-moulded layer (5).

4. Injection-moulding method according to any of claims 1-3, **characterised in that** the first injection-moulded layer (4) is injected below the film (6) directly onto an injection-moulded layer (3) that has already been injected into the mould cavity or that has been deposited therein and activated.

5. Injection-moulding method according to any of claims 1-4, **characterised in that** a single, height-adjustable injection unit is used to inject the plastics materials into both the first injection channel (10) and the second injection channel (9).

6. Injection-moulding method according to any of claims 1-4, **characterised in that** two fixedly oriented injection units that are arranged beside one another are used to inject the plastics materials into the injection channels (10, 9).

7. Injection-moulding method according to any of claims 1-6, **characterised in that** the clamping device (7) consists of two parts arranged on the frame (1), which are folded down onto the top of the frame in order to clamp the film (6).

8. Injection-moulding method according to any of claims 1-6, **characterised in that** the clamping device (7) consists of elements arranged on the outside of the cover part (8), which are lowered onto the top of the frame together with the cover part (8) when closing the mould cavity in order to clamp the film (6).

## Revendications

1. Procédé de fabrication d'articles multicouches dans le procédé de pulvérisation, où les matériaux en matière plastique servant à la fabrication sont introduits par l'intermédiaire d'au moins deux canaux d'injection (9, 10) dans une cavité de moulage formée à partir d'un cadre (1), d'un poinçon inférieur (2) et d'une partie supérieure (8), dans lequel l'article multicouche est une semelle appliquée par pulvérisation sur une tige de chaussure montée sur une forme, dans lequel la partie supérieure (8) est formée par une forme, sur laquelle la tige de chaussure (11) est montée, et dans lequel un film (6) est tendu au-dessus de la cavité de moulage au moyen d'un dispositif de serrage (7) posé sur le cadre (1) de la cavité de moulage et une première couche (4) est pulvérisée sous le film (6) par l'intermédiaire du canal d'injection inférieur (10) et une deuxième couche (5) est pulvérisée au-dessus du film (6) directement après par l'intermédiaire du deuxième canal d'injection (9), ce qui a pour effet que ladite couche (5) est reliée au moyen du film (6) à la couche (4) présente en dessous, dans lequel des matériaux en matière plastique qui se relient de manière inséparable au film sont utilisés.

2. Procédé de moulage par injection selon la revendication 1, **caractérisé en ce qu'**un espace (12) pour fabriquer la deuxième couche de moulage par injection (5) est maintenu ouvert au moyen d'un auxiliaire d'écoulement sous la partie supérieure (8) et au-dessus du film (6).

3. Procédé de moulage par injection selon la revendication 1, **caractérisé en ce que** la partie supérieure (8) s'enfonce dans la cavité de moulage par une course courte avant le remplissage de la cavité de moulage et tend ce faisant le film (6) vers le bas, après quoi le matériau en matière plastique de la première couche de moulage par injection (4) est injecté et se lie au film (6), et qu'ensuite un espace (12) pour injecter le matériau en matière plastique pour la deuxième couche de moulage par injection (5) adjacente est créé au-dessus du film (6) en soulevant la partie supérieure (8) dans sa position normale.

4. Procédé de moulage par injection selon l'une quelconque des revendications 1 - 3, **caractérisé en ce que** la première couche de moulage par injection (4) est appliquée par injection sous le film (6) directement sur une couche de moulage par injection (3) activée déjà injectée ou placée dans la cavité de moulage.

5. Procédé de moulage par injection selon l'une quelconque des revendications 1 - 4, **caractérisé en ce qu'**un unique groupe d'injection ajustable en hauteur est utilisé pour injecter les matériaux en matière plastique à la fois dans le premier (10) et dans le deuxième canal d'injection (9).

6. Procédé de moulage par injection selon l'une quelconque des revendications 1 - 4, **caractérisé en ce que** deux groupes d'injection disposés côte à côte, orientés de manière rigide sont utilisés pour injecter les matériaux en matière plastique dans les canaux d'injection (10, 9).

7. Procédé de moulage par injection selon l'une quelconque des revendications 1 - 6, **caractérisé en ce que** le dispositif de serrage (7) consiste en deux parties disposées au niveau du cadre (1), qui sont rabattues vers le bas sur le côté supérieur de cadre pour serrer le film (6).

8. Procédé de moulage par injection selon l'une quelconque des revendications 1 - 6, **caractérisé en ce que** le dispositif de serrage (7) consiste en des éléments disposés côté extérieur au niveau de la partie supérieure (8), lesquels sont descendus sur le côté supérieur de cadre conjointement avec la partie supérieure (8) lors de la fermeture de la cavité de moulage pour serrer le film (6).
